# EUROPEAN PATENT APPLICATION

(11) **EP 4 803 223 A1**
(43) Date of publication of application: **09.09.2026**
(21) Application number: 24924502.8
(22) Date of filing: 11.12.2024
(51) Int. Cl.: B21D 37/10

(54) **FORMING DIE AND BATTERY CELL MANUFACTURING SYSTEM**

(30) Priority: 18.02.2024 CN 202420292357 U
(71) Applicant: Contemporary Amperex Technology Co., Limited, Ningde, Fujian 352100 (CN)
(72) Inventor: CAI, Xianghu, Ningde, Fujian 352100 (CN); LIN, Denghua, Ningde, Fujian 352100 (CN); CAO, Mengkai, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN)
(74) Representative: Lorenz Seidler Gossel Part. mbB
(86) International application number: PCT/CN2024/138567
(87) International publication number: WO 2025/171740

(57) **Abstract**

A forming die and a battery cell manufacturing system. The forming die is used for casing forming of battery cells, and the forming die comprises a die and a punch. The die is provided with a through hole, and the punch mates with the through hole to press a piece to be machined. The punch has a first outer side surface; the first outer side surface comprises a first surface and a second surface which are sequentially distributed in a first direction; the first direction is the stamping direction of the punch; the second surface is configured to enter the through hole before the first surface in the first direction; the second surface protrudes from the first surface in a second direction; and the second direction is perpendicular to the first direction. Using the forming die to manufacture casings can improve the reliability of battery cells.

## Description

### CROSS-REFERENCE TO RELATED APPLICATIONS

This application claims priority to Chinese Patent Application CN2024202923570, filed on February 18, 2024 and entitled "FORMING DIE AND BATTERY CELL MANUFACTURING SYSTEM", which is incorporated herein by reference in its entirety.

### TECHNICAL FIELD

This application relates to the technical field of battery manufacturing, and specifically, to a forming die and a battery cell manufacturing system.

### BACKGROUND

Energy conservation and emission reduction are crucial to the sustainable development of the automotive industry. Electric vehicles, with their advantages in energy saving and environmental protection, have become an important part of sustainable development of the automotive industry. For electric vehicles, battery technology is an important factor in connection with their development.

In the manufacturing process of batteries, reliability of batteries is an issue that cannot be ignored. Therefore, how the reliability of batteries is improved is a technical issue that needs an urgent solution in battery technology.

### SUMMARY

This application provides a forming die and a battery cell manufacturing system, to improve the reliability of battery cells.

This application is implemented through the following technical solutions.

According to a first aspect, an embodiment of this application provides a forming die, applied to casing forming of a battery cell, where the forming die includes a die and a punch. The die has a through hole; and the punch is configured to press a workpiece to be processed into the through hole so as to cooperate with the through hole to extrude the workpiece to be processed. The punch has a first outer side surface, the first outer side surface includes a first surface and a second surface sequentially distributed along a first direction, the first direction being a punching direction of the punch; the second surface is configured to enter the through hole along the first direction prior to the first surface; and along a second direction, the second surface protrudes from the first surface, the second direction being perpendicular to the first direction.

According to the forming die in the embodiment of this application, through cooperation between the punch and the through hole, the workpiece to be processed is extruded, facilitating processing and manufacturing of a casing. The second surface protrudes from the first surface so that the opening of the structure obtained after the workpiece to be processed is extruded is thickened, thereby improving the strength at the opening after the casing is formed, reducing the risk of cracking of the casing near the welding position between the casing and the end cover, and improving the reliability of the battery cell.

According to some embodiments of this application, the through hole has a first inner side surface, where when the punch cooperates with the through hole, the first inner side surface is opposite the first outer side surface in the second direction; along the first direction, the first inner side surface includes a third surface and a fourth surface sequentially connected, where when the punch cooperates with the through hole, the third surface cooperates with the punch prior to the fourth surface; and along the first direction, a distance between the third surface and the second surface in the second direction gradually decreases.

In the above solution, the distance between the third surface and the second surface in the second direction gradually decreases, facilitate guiding of the punch.

According to some embodiments of this application, the first inner side surface further includes a fifth surface, where along the first direction, the third surface, the fourth surface, and the fifth surface are sequentially connected, and a distance between the fifth surface and the second surface in the second direction gradually increases.

In the above solution, the distance between the fifth surface and the second surface in the second direction gradually increases, facilitating material flow during punching to release stress.

According to some embodiments of this application, the first outer side surface further includes a transition surface, where along the first direction, the first surface, the transition surface, and the second surface are sequentially distributed; and along the first direction, a dimension by which the transition surface protrudes from the first surface gradually increases.

In the above solution, the provision of the transition surface facilitates demolding of the punch, reducing the damage caused by the punch to the workpiece to be processed.

According to some embodiments of this application, the transition surface is a plane, and an angle between the transition surface and a plane on which the second surface is located is θ, satisfying 3° ≤ θ ≤ 60°.

In the above solution, when the angle between the transition surface and the plane on which the second surface is located satisfies the above range: on one hand, in the case of θ ≥ 3°, the forming resistance is relatively small and the demolding resistance is relatively small; on the other hand, in the case of θ ≤ 60°, the dimension of the transition surface in the second direction is relatively small, which reduces the space occupation at the position corresponding to the first surface after the casing is formed, allowing the battery cell to have a relatively high energy density.

According to some embodiments of this application, 20° ≤ θ ≤ 40°.

In the above solution, compared with θ < 20°, in the case of θ ≥ 20°, the demolding resistance is further reduced, reducing the damage caused by the punch to the workpiece to be processed. Compared with θ > 40°, in the case of θ ≤ 40°, the dimension of the transition surface in the second direction is relatively small, further reducing the space occupation at the position corresponding to the first surface after the casing is formed.

According to some embodiments of this application, the transition surface transitions to the first surface through a first arc surface, and the transition surface transitions to the second surface through a second arc surface.

In the above solution, the transition surface transitions to the first surface through the first arc surface, and the transition surface transitions to the second surface through the second arc surface, reducing the scratching caused by the punch to the workpiece to be processed during demolding and facilitating the demolding.

According to some embodiments of this application, a radius of the first arc surface is R₁, satisfying 0.05 mm ≤ R₁ ≤ 0.4 mm; and/or a radius of the second arc surface is R₂, satisfying 0.05 mm ≤ R₂ ≤ 0.4 mm.

In the above solution, when the radius of the first arc surface satisfies the above relationship, and/or the radius of the second arc surface satisfies the above relationship: on one hand, in the case of R₁ ≥ 0.05 mm and/or R₂ ≥ 0.05 mm, the processing difficulty is relatively low; on the other hand, in the case of R₁ ≤ 0.4 mm and/or R₂ ≤ 0.4 mm, the damage caused by the punch to the workpiece to be processed is reduced, and the damage to the punch during demolding is reduced, thereby improving the service life of the punch.

According to some embodiments of this application, 0.08 mm ≤ R₁ ≤ 0.12 mm; and/or 0.08 mm ≤ R₂ ≤ 0.12 mm.

In the above solution, compared with R₁ < 0.08 mm, in the case of R₁ ≥ 0.08 mm, the processing difficulty is further reduced; compared with R₁ > 0.12 mm, in the case of R₁ ≤ 0.12 mm, the damage caused by the punch to the workpiece to be processed is further reduced, the damage to the punch during demolding is reduced, and the service life of the punch is further improved. Compared with R₂ < 0.08 mm, in the case of R₂ ≥ 0.08 mm, the processing difficulty is further reduced; compared with R₂ > 0.12 mm, in the case of R₂ ≤ 0.12 mm, the damage caused by the punch to the workpiece to be processed is further reduced, damage to the punch during demolding is reduced, and the service life of the punch is further improved.

According to some embodiments of this application, a surface roughness of the first arc surface is Ra₁, satisfying 0.01 mm ≤ Ra₁ ≤ 0.1 mm; and/or a surface roughness of the second arc surface is Ra₂, satisfying 0.01 mm ≤ Ra₂ ≤ 0.1 mm.

In the above solution, when the surface roughness of the first arc surface satisfies the above requirements, and/or the surface roughness of the second arc surface satisfies the above requirements: on one hand, in the case of Ra₁ ≥ 0.01 mm and/or Ra₂ ≥ 0.01 mm, scratching caused by the punch to the workpiece to be processed during demolding is reduced, facilitating demolding; on the other hand, in the case of Ra₁ ≤ 0.1 mm and/or Ra₂ ≤ 0.1 mm, the processing and manufacturing difficulty is relatively low and the processing cost is relatively low.

According to some embodiments of this application, 0.03 mm ≤ Ra₁ ≤ 0.07 mm; and/or 0.03 mm ≤ Ra₂ ≤ 0.07 mm.

In the above solution, compared with Ra₁ < 0.03 mm, in the case of Ra₁ ≥ 0.03 mm, the processing and manufacturing difficulty is further reduced and the processing cost is reduced; compared with Ra₁ > 0.07 mm, in the case of Ra₁ ≤ 0.07, scratching caused by the punch to the workpiece to be processed during demolding is further reduced, facilitating demolding. Compared with Ra₂ < 0.03 mm, in the case of Ra₂ ≥ 0.03 mm, the processing and manufacturing difficulty is further reduced and the processing cost is reduced; compared with Ra₂ > 0.07 mm, in the case of Ra₂ ≤ 0.07, scratching caused by the punch to the workpiece to be processed during demolding is further reduced, facilitating demolding.

According to some embodiments of this application, the first outer side surface is provided in two, and the two first outer side surfaces are disposed opposite each other in the second direction; and the punch further has two second outer side surfaces disposed opposite each other in a third direction, where the third direction, the second direction, and the first direction are perpendicular to each other, and an area of the second outer side surface is smaller than an area of the first outer side surface.

In the above solution, there are two first outer side surfaces, facilitating forming of a casing. The area of the second outer side surface is smaller than the area of the first outer side surface, and the first outer side surface can be used to form the large face of the formed casing, reducing the risk of cracking in the region of the casing near the welding position between the casing and the end cover.

According to some embodiments of this application, the second outer side surface includes a sixth surface and a seventh surface sequentially distributed along the first direction, where along the third direction, the seventh surface protrudes from the sixth surface.

In the above solution, the opening of the wall portion of the casing corresponding to the second outer side surface is thickened, further reducing the risk of cracking in the region of the casing near the welding position between the casing and the end cover.

According to some embodiments of this application, the punch further has a corner surface, where the corner surface connects the first outer side surface and the second outer side surface adjacent to each other, and the corner surface includes an eighth surface and a ninth surface sequentially distributed along the first direction, where the eighth surface and the ninth surface are both arc surfaces, and along a radial direction of the arc surfaces, the ninth surface protrudes from the eighth surface.

In the above solution, thickening is performed at the corner of the punch to facilitate thickening at the corner of the casing after the casing is formed, thereby enhancing the strength of the casing and reducing the risk of cracking of the casing.

According to some embodiments of this application, the through hole has a first inner side surface, where when the punch cooperates with the through hole, the first inner side surface is opposite the first outer side surface in the second direction; and a dimension d by which the second surface protrudes from the first surface is greater than or equal to 0.1 times a minimum distance D between the second surface and the first inner side surface, and the dimension d by which the second surface protrudes from the first surface is less than or equal to 0.8 times the minimum distance D between the second surface and the first inner side surface.

In the above solution, on one hand, a larger d (or a smaller D) leads to a greater thickness at the opening of the casing formed after the punch cooperates with the through hole, as well as a higher strength at the opening of the casing. When the dimension d by which the second surface protrudes from the first surface is greater than or equal to 0.1 times the minimum distance D between the second surface and the first inner side surface, the thickness at the position corresponding to the first surface after the casing is formed is thicker, and the strength at this position is higher, reducing the risk of cracking of the casing near the welding region between the casing and the end cover. On the other hand, a smaller d (or a larger D) leads to a smaller dimension by which the second surface protrudes from the first surface, as well as a smaller force exerted by the punch on the workpiece to be processed during demolding of the workpiece to be processed and the punch. When the dimension d by which the second surface protrudes from the first surface is less than or equal to 0.8 times the minimum distance D between the second surface and the first inner side surface, the risk of tearing of the workpiece to be processed can be reduced.

According to some embodiments of this application, the dimension d by which the second surface protrudes from the first surface is greater than or equal to 0.3 times the minimum distance D between the second surface and the first inner side surface, and the dimension d by which the second surface protrudes from the first surface is less than or equal to 0.5 times the minimum distance D between the second surface and the first inner side surface.

In the above solution, compared with d/D < 30%, in the case of d/D ≥ 30%, the thickness at the position corresponding to the first surface after the casing is formed is further increased, improving the strength at this position. Compared with d/D > 50%, in the case of d/D ≤ 50%, the risk of tearing of the workpiece to be processed is further reduced.

According to some embodiments of this application, the punch includes a substrate and a coating disposed on a surface of the substrate, where a material of the substrate is steel, and a material of the coating is titanium aluminum chromium nitride, chromium aluminum nitride, or titanium aluminum nitride.

In the above solution, the material of the substrate is steel, allowing the substrate to have a relatively high strength. The coating disposed on the surface of the substrate can improve the wear resistance of the punch and extend the service life of the punch.

According to a second aspect, an embodiment of this application further provides a battery cell manufacturing system including a plurality of forming dies according to any one of the above embodiments, where the plurality of forming dies are configured for a plurality of forming processes of a casing.

Additional aspects and advantages of this application will be set forth in part in the description below, and will in part become apparent from the description, or will be learned from the practice of this application.

### BRIEF DESCRIPTION OF DRAWINGS

To describe the technical solutions in the embodiments of this application more clearly, the following briefly describes the accompanying drawings for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic exploded view of a forming die according to some embodiments of this application;
FIG. 2 is a perspective view of a punch according to some embodiments of this application;
FIG. 3 is a schematic structural view of a first outer side surface of a punch according to some embodiments of this application;
FIG. 4 is a partial enlarged view at position A in FIG. 3;
FIG. 5 is a schematic view of a cooperation state between a punch and a through hole according to some embodiments of this application;
FIG. 6 is a schematic structural view of a punch according to some embodiments of this application;
FIG. 7 is a partial enlarged view at position B in FIG. 6;
FIG. 8 is a schematic view of a substrate and a coating of a punch according to some embodiments of this application;
FIG. 9 is a schematic view of a punch and a die cooperating to form a casing according to some embodiments of this application;
FIG. 10 is a schematic structural view of a casing formed by cooperation between a punch and a die according to some embodiments of this application;
FIG. 11 is a cross-sectional view of a casing formed by cooperation between a punch and a die according to some embodiments of this application;
FIG. 12 is a partial enlarged view at position C in FIG. 11; and
FIG. 13 is a partial schematic view of a second wall according to some embodiments of this application.

In the drawings, the drawings are not drawn to actual scale.

Reference signs: 100. forming die; 10. die; 11. through hole; 111. first inner side surface; 111a. third surface; 111b. fourth surface; 111c. fifth surface; 20. punch; 21. first outer side surface; 211. first surface; 212. second surface; 213. transition surface; 214. first arc surface; 215. second arc surface; 22. second outer side surface; 221. sixth surface; 222. seventh surface; 23. corner surface; 231. eighth surface; 232. ninth surface; 24. substrate; 25. coating; 26. lower end surface; 30. casing; 31. first wall; 311. first region; 312. second region; 32. second wall; 321. third region; 322. fourth region; 33. bottom wall; X. first direction; Y. second direction; and Z. third direction.

### DETAILED DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The phrase "embodiment" appearing in various places in this specification does not necessarily refer to the same embodiment or an independent or alternative embodiment that is exclusive of other embodiments. It is explicitly or implicitly understood by persons skilled in the art that the embodiments described in this application may be combined with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

The term "a plurality of" in this application refers to two or more (including two); similarly, the term "a plurality of groups" refers to two or more groups (including two groups), and the term "a plurality of pieces" refers to two or more pieces (including two pieces).

In the embodiments of this application, a battery cell may be a secondary battery. The secondary battery is a battery cell that can be charged after discharge to activate active materials for continuous use.

The battery cell may be, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like.

In some embodiments, the battery cell may include a housing. The housing is configured to package components such as an electrode assembly and an electrolyte. The housing may be a steel shell, an aluminum shell, a composite metal shell (such as a copper-aluminum composite shell), or the like.

In some embodiments, the housing includes an end cover and a casing, where the casing is provided with an opening, and the end cover closes the opening to form a sealed space for accommodating the electrode assembly, the electrolyte, and other substances. The casing may be provided with one or more openings. The end cover may also be provided in one or in plurality.

The development of battery technology requires consideration of multiple design factors, such as energy density, discharge capacity, charge-discharge rate, and other performance parameters. In addition, the reliability of the battery needs to be considered.

In some embodiments, the casing can be formed by stamping. For example, a punch cooperates with a die to extrude a workpiece to be processed so that the workpiece to be processed forms the casing. However, a wall portion of the casing is typically a structure of equal thickness. When the energy density of the battery cell is improved by reducing the wall thickness of the housing, after the casing is welded to the end cover, a heat-affected zone is formed near the welding position between the casing and the end cover, reducing the strength of the casing and the end cover in this region. As a result, the region of the casing near the welding position between the casing and the end cover is prone to cracking, leading to a low reliability of the battery cell.

In view of this, in order to solve the problem of relatively low reliability of a battery cell caused by a region of a casing near a welding position between a casing and an end cover being prone to cracking, embodiments of this application provide a technical solution in which a forming die is configured to form a casing of a battery cell. A first outer side surface of a punch includes a first surface and a second surface sequentially distributed along a first direction, the first surface being a punching direction of the punch; and the second surface protrudes from the first surface along a second direction, the second direction being perpendicular to the first direction. After the workpiece to be processed is extruded through cooperation between the punch and a through hole, a thickness at an opening of the formed structure is thicker and a strength at the opening is higher, improving the reliability of the battery cell.

During the forming process, the first surface corresponds to the opening position of the structure obtained after the workpiece to be processed is extruded, the second surface protrudes from the first surface, so that the thickness at the opening of the structure obtained after the workpiece to be processed is extruded is thicker, improving the strength at the opening. This can reduce the risk of cracking in the region of the casing near the welding position between the casing and the end cover after the casing is welded to the end cover, thereby improving the reliability of the battery cell.

The battery manufactured using the forming die disclosed in the embodiments of this application can be, but is not limited to, used in electric devices such as vehicles, ships, or aircraft. A power supply system of the electric device may be composed using the battery disclosed in this application.

The following describes the forming die provided in the embodiments of this application with reference to the accompanying drawings.

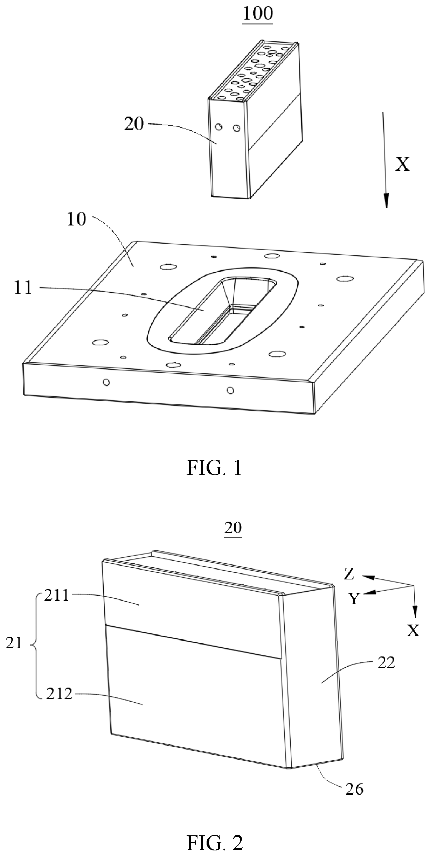

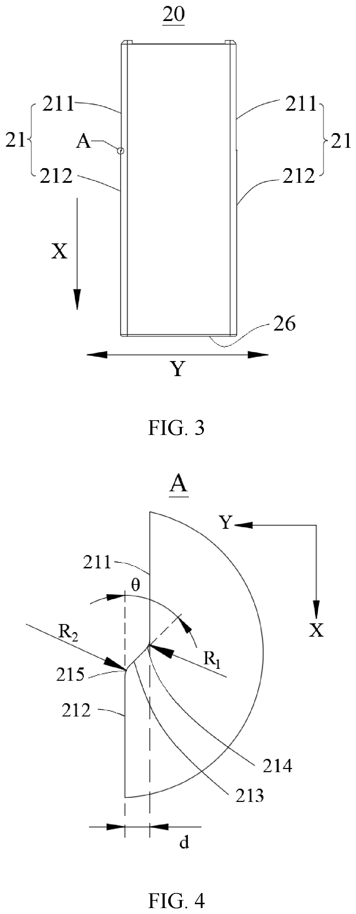

Referring to FIGs. 1 to 4, FIG. 1 is a schematic exploded view of a forming die according to some embodiments of this application, FIG. 2 is a perspective view of a punch according to some embodiments of this application, FIG. 3 is a schematic structural view of a first outer side surface of a punch according to some embodiments of this application, and FIG. 4 is a partial enlarged view at position A in FIG. 3. An embodiment of this application provides a forming die 100, applied to forming of a casing of a battery cell. The forming die 100 includes a die 10 and a punch 20. The die 10 has a through hole 11; and the punch 20 is configured to press a workpiece to be processed into the through hole 11 so as to cooperate with the through hole 11 to extrude the workpiece to be processed. The punch 20 has a first outer side surface 21; the first outer side surface 21 includes a first surface 211 and a second surface 212 sequentially distributed along a first direction X, the first direction X being a punching direction of the punch 20; the second surface 212 is configured to enter the through hole 11 along the first direction X prior to the first surface 211; and along a second direction Y, the second surface 212 protrudes from the first surface 211, the second direction Y being perpendicular to the first direction X.

In the figures, the direction indicated by the letter X is the first direction. A punching direction of the punch 20 is a direction in which the punch 20 enters the through hole 11. The direction indicated by the letter Y is the second direction.

The die 10 is configured to provide an accommodating space for accommodating the punch 20. Through cooperation between the punch 20 and the die 10, the workpiece to be processed can be extruded to obtain a preset structure. For example, the punch 20 approaches the workpiece to be processed along the first direction X and presses at least a portion of the workpiece to be processed into the through hole 11 of the die 10, and the punch 20 cooperates with a wall of the through hole 11, thereby forming the workpiece to be processed into the preset structure.

The through hole 11 is a hole of the die 10 for cooperating with the punch 20, for the punch 20 to be inserted so as to extrude the workpiece to be processed.

The first outer side surface 21 refers to a side surface of the punch 20 for cooperating with the through hole 11.

The first surface 211 and the second surface 212 are sequentially distributed along the first direction X. After the punch 20 cooperates with the through hole 11 to extrude the workpiece to be processed, the first surface 211 corresponds to an opening of the structure obtained after the workpiece to be processed is extruded.

The second surface 212 protrudes from the first surface 211 along the second direction Y, and during the forming process, the second surface 212 is closer to the wall of the through hole 11 than the first surface 211 along the second direction Y. During the forming process, the thickness of the structure extruded by the second surface 212 and the wall of the through hole 11 is thinner, and the thickness of the structure extruded by the first surface 211 and the wall of the through hole 11 is thicker.

According to the forming die 100 in the embodiments of this application, through cooperation between the punch 20 and the through hole 11, the workpiece to be processed is extruded, facilitating processing and manufacturing of a casing. The second surface 212 protrudes from the first surface 211 so that the opening of the structure obtained after the workpiece to be processed is extruded is thickened, thereby improving the strength at the opening after the casing is formed, reducing the risk of cracking of the casing near the welding position between the casing and the end cover, and improving the reliability of the battery cell.

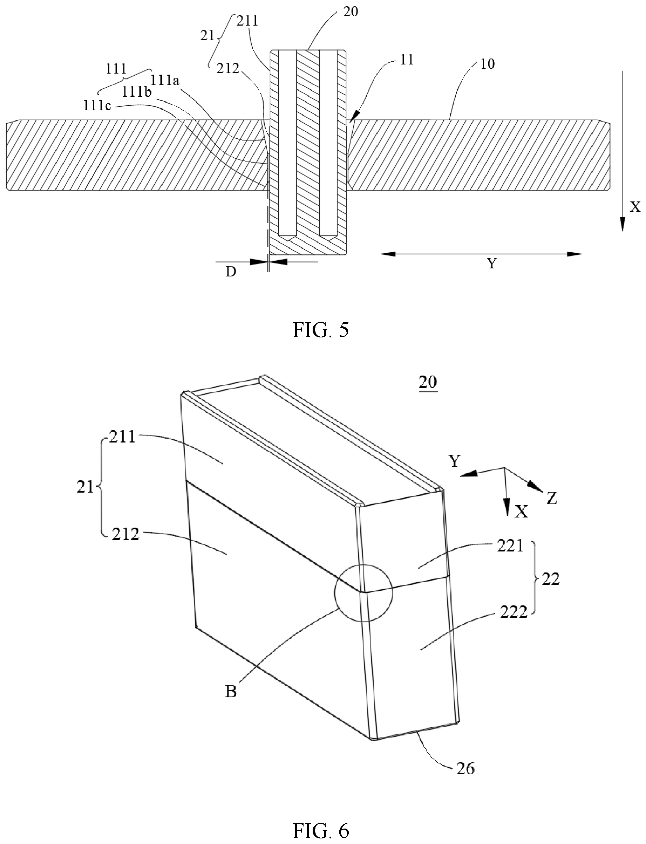

Referring to FIG. 5, FIG. 5 is a schematic view of a cooperation state between a punch and a through hole according to some embodiments of this application. According to some embodiments of this application, the through hole 11 has a first inner side surface 111. When the punch 20 cooperates with the through hole 11, the first inner side surface 111 is opposite the first outer side surface 21 in the second direction Y. Along the first direction X, the first inner side surface 111 includes a third surface 111a and a fourth surface 111b sequentially connected, where when the punch 20 cooperates with the through hole 11, the third surface 111a cooperates with the punch 20 prior to the fourth surface 111b. Along the first direction X, a distance between the third surface 111a and the second surface 212 in the second direction Y gradually decreases.

The third surface 111a may be located at an opening position where the punch 20 enters the through hole 11.

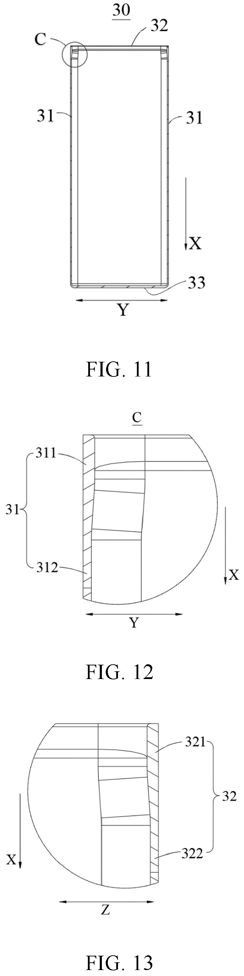

Punching process: During cooperation between the punch 20 and the through hole 11, the second surface 212 first cooperates with the third surface 111a, and as the punch 20 moves, the second surface 212 gradually cooperates with the fourth surface 111b. As the punch 20 moves, the first surface 211 gradually cooperates with the third surface 111a and the fourth surface 111b. During punching, after the fourth surface 111b cooperates with the second surface 212 and the first surface 211, the first wall 31 of the casing 30 is formed (refer to FIG. 12).

Along the first direction X, from an end of the third surface 111a far away from the fourth surface 111b to an end close to the fourth surface 111b, the distance between the third surface 111a and the second surface 212 in the second direction Y gradually decreases. This is equivalent to an opening of the through hole 11 near the third surface 111a being larger so as to guide the punch 20 in the process of the punch 20 entering into the through hole 11.

In some embodiments, the fourth surface 111b is parallel to the first direction X, and the fourth surface 111b is a plane so that an outer surface of the casing 30 corresponding to the fourth surface 111b is a plane.

In the above solution, along the first direction X, the distance between the third surface 111a and the second surface 212 in the second direction Y gradually decreases, so as to guide the punch 20 when the punch 20 enters the through hole 11.

According to some embodiments of this application, the first inner side surface 111 further includes a fifth surface 111c, where along the first direction X, the third surface 111a, the fourth surface 111b, and the fifth surface 111c are sequentially connected, and a distance between the fifth surface 111c and the second surface 212 in the second direction Y gradually increases.

The third surface 111a, the fourth surface 111b, and the fifth surface 111c are sequentially distributed along the first direction X.

The fifth surface 111c and the third surface 111a may be located at two ends of the through hole 11 in the first direction X. For example, the fifth surface 111c may constitute another opening of the through hole 11. Along the first direction X, from an end of the fifth surface 111c close to the fourth surface 111b to an end of the fifth surface 111c far away from the fourth surface 111b, a distance between the fifth surface 111c and the second surface 212 in the second direction Y gradually increases, and an opening of the through hole 11 near the fifth surface 111c is larger, facilitating material flow when the punch 20 cooperates with the through hole 11.

In the above solution, along the first direction X, the distance between the fifth surface 111c and the second surface 212 in the second direction Y gradually increases, facilitating material flow during punching to release stress.

Referring to FIG. 4, according to some embodiments of this application, the first outer side surface 21 further includes a transition surface 213, where along the first direction X, the first surface 211, the transition surface 213, and the second surface 212 are sequentially distributed; and along the first direction X, a dimension by which the transition surface 213 protrudes from the first surface 211 gradually increases.

Along the first direction X, the transition surface 213 is located between the first surface 211 and the second surface 212, the transition surface 213 is used to connect the first surface 211 and the second surface 212, and the transition surface 213 realizes transition from the first surface 211 to the second surface 212.

"Along the first direction X, a dimension by which the transition surface 213 protrudes from the first surface 211 gradually increases" means that from an end of the transition surface 213 close to the first surface 211 to an end of the transition surface 213 close to the second surface 212, the dimension by which the transition surface 213 protrudes from the first surface 211 in the second direction Y gradually increases.

In the above solution, the provision of the transition surface 213 facilitates demolding of the punch 20, reducing the damage caused by the punch 20 to the workpiece to be processed.

Referring to FIG. 4, according to some embodiments of this application, the transition surface 213 is a plane, and an angle between the transition surface 213 and a plane on which the second surface 212 is located is θ, satisfying 3° ≤ θ ≤ 60°.

In the figure, the angle indicated by θ is the acute angle between the transition surface 213 and the plane on which the first surface 211 is located, that is, the angle between the extended plane of the first surface 211 and the transition surface 213.

Optionally, θ may be, but is not limited to, 3°, 6°, 9°, 12°, 15°, 18°, 21°, 24°, 27°, 30°, 33°, 36°, 39°, 42°, 45°, 48°, 51°, 54°, 57°, 60°, or the like.

In the above solution, when the angle between the transition surface 213 and the plane on which the second surface 212 is located satisfies the above range: on one hand, in the case of θ ≥ 3°, the forming resistance is relatively small and the demolding resistance is relatively small; on the other hand, in the case of θ ≤ 60°, the dimension of the transition surface 213 in the second direction Y is relatively small, which reduces the space occupation at the position corresponding to the first surface 211 after the casing is formed, allowing the battery cell to have a relatively high energy density.

According to some embodiments of this application, 20° ≤ θ ≤ 40°.

Optionally, θ may be, but is not limited to, 20°, 22°, 24°, 26°, 28°, 30°, 32°, 34°, 36°, 38°, 40°, or the like.

In the above solution, compared with θ < 20°, in the case of θ ≥ 20°, the demolding resistance is further reduced, reducing the damage caused by the punch 20 to the workpiece to be processed. Compared with θ > 40°, in the case of θ ≤ 40°, the dimension of the transition surface 213 in the second direction Y is relatively small, further reducing the space occupation at the position corresponding to the first surface 211 after the casing 30 is formed.

Referring to FIG. 4, according to some embodiments of this application, the transition surface 213 transitions to the first surface 211 through a first arc surface 214, and the transition surface 213 transitions to the second surface 212 through a second arc surface 215.

The transition surface 213 transitions to the first surface 211 with a fillet, and the transition surface 213 transitions to the second surface 212 with a fillet.

In the above solution, the transition surface 213 transitions to the first surface 211 through the first arc surface 214, and the transition surface 213 transitions to the second surface 212 through the second arc surface 215, reducing the scratching caused by the punch 20 to the workpiece to be processed during demolding and facilitating the demolding.

Referring to FIG. 4, according to some embodiments of this application, a radius of the first arc surface 214 is R₁, satisfying 0.05 mm ≤ R₁ ≤ 0.4 mm; and/or the radius of the second arc surface 215 is R₂, satisfying 0.05 mm ≤ R₂ ≤ 0.4 mm.

Optionally, R₁ may be, but is not limited to, 0.05 mm, 0.07 mm, 0.1 mm, 0.13 mm, 0.15 mm, 0.17 mm, 0.2 mm, 0.23 mm, 0.25 mm, 0.27 mm, 0.3 mm, 0.33 mm, 0.35 mm, 0.37 mm, 0.4 mm, or the like.

Optionally, R₂ may be, but is not limited to, 0.05 mm, 0.07 mm, 0.1 mm, 0.13 mm, 0.15 mm, 0.17 mm, 0.2 mm, 0.23 mm, 0.25 mm, 0.27 mm, 0.3 mm, 0.33 mm, 0.35 mm, 0.37 mm, 0.4 mm, or the like.

In the above solution, when the radius of the first arc surface 214 satisfies the above relationship, and/or the radius of the second arc surface 215 satisfies the above relationship: on one hand, in the case of R₁ ≥ 0.05 mm and/or R₂ ≥ 0.05 mm, the processing difficulty is relatively low; on the other hand, in the case of R₁ ≤ 0.4 mm and/or R₂ ≤ 0.4 mm, the damage caused by the punch 20 to the workpiece to be processed is reduced, and the damage to the punch 20 during demolding is reduced, thereby improving the service life of the punch 20.

According to some embodiments of this application, 0.08 mm ≤ R₁ ≤ 0.12 mm; and/or, 0.08 mm ≤ R₂ ≤ 0.12 mm.

Optionally, R₁ may be, but is not limited to, 0.08 mm, 0.09 mm, 0.1 mm, 0.11 mm, 0.12 mm, or the like.

Optionally, R₂ may be, but is not limited to, 0.08 mm, 0.09 mm, 0.1 mm, 0.11 mm, 0.12 mm, or the like.

In the above solution, compared with R₁ < 0.08 mm, in the case of R₁ ≥ 0.08 mm, the processing difficulty is further reduced; compared with R₁ > 0.12 mm, in the case of R₁ ≤ 0.12 mm, the damage caused by the punch 20 to the workpiece to be processed is further reduced, the damage to the punch 20 during demolding is reduced, and the service life of the punch 20 is further improved. Compared with R₂ < 0.08 mm, in the case of R₂ ≥ 0.08 mm, the processing difficulty is further reduced; compared with R₂ > 0.12 mm, in the case of R₂ ≤ 0.12 mm, the damage caused by the punch 20 to the workpiece to be processed is further reduced, the damage to the punch 20 during demolding is reduced, and the service life of the punch 20 is further improved.

According to some embodiments of this application, a surface roughness of the first arc surface 214 is Ra₁, satisfying 0.01 mm ≤ Ra₁ ≤ 0.1 mm; and/or a surface roughness of the second arc surface 215 is Ra₂, satisfying 0.01 mm ≤ Ra₂ ≤ 0.1 mm.

The surface roughness Ra₁ and the surface roughness Ra₂ are both arithmetic mean deviations of the profile.

A smaller value of surface roughness indicates a smoother surface and a higher processing and manufacturing difficulty.

Optionally, Ra₁ may be, but is not limited to, 0.01 mm, 0.02 mm, 0.03 mm, 0.04 mm, 0.05 mm, 0.06 mm, 0.07 mm, 0.08 mm, 0.09 mm, 0.1 mm, or the like.

Optionally, Ra₂ may be, but is not limited to, 0.01 mm, 0.02 mm, 0.03 mm, 0.04 mm, 0.05 mm, 0.06 mm, 0.07 mm, 0.08 mm, 0.09 mm, 0.1 mm, or the like.

In the above solution, when the surface roughness of the first arc surface 214 satisfies the above requirements, and/or the surface roughness of the second arc surface 215 satisfies the above requirements: on one hand, in the case of Ra₁ ≥ 0.01 mm and/or Ra₂ ≥ 0.01 mm, scratching caused by the punch 20 to the workpiece to be processed during demolding is reduced, facilitating demolding; on the other hand, in the case of Ra₁ ≤ 0.1 mm and/or Ra₂ ≤ 0.1 mm, the processing and manufacturing difficulty is relatively low and the processing cost is relatively low.

According to some embodiments of this application, 0.03 mm ≤ Ra₁ ≤ 0.07 mm; and/or 0.03 mm ≤ Ra₂ ≤ 0.07 mm.

Optionally, Ra₁ may be, but is not limited to, 0.03 mm, 0.035 mm, 0.04 mm, 0.045 mm, 0.05 mm, 0.055 mm, 0.06 mm, 0.065 mm, 0.07 mm, or the like.

Optionally, Ra₂ may be, but is not limited to, 0.03 mm, 0.035 mm, 0.04 mm, 0.045 mm, 0.05 mm, 0.055 mm, 0.06 mm, 0.065 mm, 0.07 mm, or the like.

In the above solution, compared with Ra₁ < 0.03 mm, in the case of Ra₁ ≥ 0.03 mm, the processing and manufacturing difficulty is further reduced and the processing cost is reduced; compared with Ra₁ > 0.07 mm, in the case of Ra₁ ≤ 0.07, scratching caused by the punch 20 to the workpiece to be processed during demolding is further reduced, facilitating demolding. Compared with Ra₂ < 0.03 mm, in the case of Ra₂ ≥ 0.03 mm, the processing and manufacturing difficulty is further reduced and the processing cost is reduced; compared with Ra₂ > 0.07 mm, in the case of Ra₂ ≤ 0.07, scratching caused by the punch 20 to the workpiece to be processed during demolding is further reduced, facilitating demolding.

Referring to FIG. 2, and further referring to FIGs. 4 and 5, FIG. 5 is a schematic view of a cooperation state between a punch and a through hole according to some embodiments of this application. According to some embodiments of this application, the through hole 11 has a first inner side surface 111, where when the punch 20 cooperates with the through hole 11, the first inner side surface 111 is opposite the first outer side surface 21 in the second direction Y; and a dimension d by which the second surface 212 protrudes from the first surface 211 is greater than or equal to 0.1 times a minimum distance D between the second surface 212 and the first inner side surface 111, and the dimension d by which the second surface 212 protrudes from the first surface 211 is less than or equal to 0.8 times the minimum distance D between the second surface 212 and the first inner side surface 111.

d may be a height of a step formed between the first surface 211 and the second surface 212 on the first outer side surface 21, that is, along the second direction, a dimension by which the second surface protrudes from the first surface. A larger d value indicates a larger dimension by which the second surface 212 protrudes from the first surface 211, and a thicker opening of the structure obtained after the workpiece to be processed is extruded. A smaller d value indicates a smaller dimension by which the second surface 212 protrudes from the first surface 211, and a thinner opening of the structure obtained after the workpiece to be processed is extruded.

The first inner side surface 111 refers to a surface of the through hole 11 corresponding to the first outer side surface 21. The first inner side surface 111 and the first outer side surface 21 cooperate to extrude the workpiece to be processed.

D is a minimum distance between the second surface 212 and the first inner side surface 111 along the second direction Y when the punch 20 cooperates with the through hole 11. A larger D value indicates a thicker portion of the workpiece to be processed between the second surface 212 and the first inner side surface 111. A smaller D value indicates a thinner portion of the workpiece to be processed between the second surface 212 and the first inner side surface 111.

A larger value of d/D indicates a larger d value or a smaller D value; a smaller value of d/D indicates a smaller d value or a larger D value. For example, a larger value of d/D, with D unchanged and d increasing (or with d unchanged and D decreasing), leads to a thicker opening of the casing 30 (such as the first region 311, as shown in FIG. 12) formed after the punch 20 cooperates with the through hole 11, and a higher strength at the opening of the casing 30. For another example, a smaller value of d/D, with D unchanged and d decreasing, leads to a smaller dimension by which the second surface 212 protrudes from the first surface 211, and a smaller force exerted by the punch 20 on the workpiece to be processed during demolding of the workpiece to be processed and the punch 20, reducing the risk of tearing during forming of the workpiece to be processed. Alternatively, with D increasing and d unchanged, a wall thickness of the body of the casing 30 (corresponding to the second surface, such as the second region 312 shown in FIG. 12) is thicker, and a thickening degree of the opening of the casing 30 is lower compared to the body, reducing the risk of tearing during processing and demolding of the casing.

Optionally, d/D may be, but is not limited to, 10%, 15%, 20%, 25%, 30%, 35%, 40%, 45%, 50%, 55%, 60%, 65%, 70%, 75%, 80%, or the like.

In the above solution, when d/D satisfies the above relationship (10% ≤ d/D ≤ 80%): on one hand, a larger d (or a smaller D) leads to a greater thickness at the opening of the casing 30 formed after the punch 20 cooperates with the through hole 11, as well as a higher strength at the opening of the casing 30. When the dimension d by which the second surface 212 protrudes from the first surface 211 is greater than or equal to 0.1 times the minimum distance D between the second surface 212 and the first inner side surface 111, the thickness at the position corresponding to the first surface 211 after the casing 30 is formed is thicker, the strength at this position is higher, reducing the risk of cracking of the casing 30 near the welding region between the casing 30 and the end cover. On the other hand, a smaller d (or a larger D) leads to a smaller dimension by which the second surface 212 protrudes from the first surface 211, as well as a smaller force exerted by the punch 20 on the workpiece to be processed during demolding of the workpiece to be processed and the punch 20. When the dimension d by which the second surface 212 protrudes from the first surface 211 is less than or equal to 0.8 times the minimum distance D between the second surface 212 and the first inner side surface 111, the risk of tearing of the workpiece to be processed can be reduced.

According to some embodiments of this application, 30% ≤ d/D ≤ 50%.

Optionally, d/D may be, but is not limited to, 30%, 32%, 34%, 36%, 38%, 40%, 42%, 44%, 46%, 48%, 50%, or the like.

In the above solution, compared with d/D < 30%, in the case of d/D ≥ 30%, the thickness at the position corresponding to the first surface 211 after the casing is formed is further increased, improving the strength at this position. Compared with d/D > 50%, in the case of d/D ≤ 50%, the risk of tearing of the workpiece to be processed is further reduced.

Referring to FIG. 6, FIG. 6 is a schematic structural view of a punch according to some embodiments of this application. According to some embodiments of this application, the first outer side surface 21 is provided in two, and the two first outer side surfaces 21 are disposed opposite each other in the second direction Y; and the punch 20 further has two second outer side surfaces 22 disposed opposite each other in a third direction Z, where the third direction Z, the second direction Y and the first direction X are perpendicular to each other, and an area of the second outer side surface 22 is smaller than an area of the first outer side surface 21.

The two first outer side surfaces 21 are disposed opposite each other in the second direction Y, and the two first outer side surfaces 21 are used to form two wall portions of the casing opposite in the second direction Y.

The two second outer side surfaces 22 are disposed opposite each other in the third direction Z, and both ends of each second outer side surface 22 are respectively connected to the two first outer side surfaces 21.

The area of the second outer side surface 22 is smaller than the area of the first outer side surface 21, so that the area of the wall portion of the casing corresponding to the second outer side surface 22 is smaller than the area of the wall portion of the casing corresponding to the first outer side surface 21. That is, the wall portion of the casing formed through cooperation between the first outer side surface 21 and the through hole 11 may be the large face of the casing. The wall portion of the casing formed through cooperation between the first outer side surface 21 and the through hole 11 can reduce the risk of cracking in the region of the casing near the welding position between the casing and the end cover during charge-discharge cycles of the battery cell when gas generation by the electrode assembly is large or when the battery cell is thermally runaway.

In the above solution, there are two first outer side surfaces 21, facilitating forming of a casing. The area of the second outer side surface 22 is smaller than the area of the first outer side surface 21, and the first outer side surface 21 can be used to form the large face of the formed casing, reducing the risk of cracking in the region of the casing near the welding position between the casing and the end cover.

Referring to FIG. 2, FIG. 3, and FIG. 6, the punch 20 further includes a lower end surface 26, the two first outer side surfaces 21 and the two second outer side surfaces 22 being disposed around the lower end surface 26. When the punch 20 cooperates with the through hole 11, the lower end surface 26 enters the through hole 11 prior to the first outer side surfaces 21 and the second outer side surfaces 22.

During forming of the casing 30, the lower end surface 26 of the punch 20 presses the workpiece to be processed into the through hole 11 of the die 10, and as the workpiece to be processed moves in the through hole 11, the workpiece to be processed is clamped by the wall of the through hole 11 and the punch 20, the first outer side surface 21 cooperates with the through hole 11 to form the first wall of the casing, the second outer side surface 22 cooperates with the through hole 11 to form the second wall of the casing, and the lower end surface 26 is used to form the bottom wall of the casing. The first wall and the second wall are two side walls of the casing, there are two first walls and two second walls, the two first walls are disposed opposite each other in the second direction Y, the two second walls are disposed opposite each other in the third direction Z, the two first walls and the two second walls are disposed around the bottom wall, one end of each of the two first walls and one end of each of the two second walls are respectively connected to the bottom wall, and the other end of each of the two first walls and the other end of each of the two second walls enclose the opening of the casing.

Referring to FIG. 6, according to some embodiments of this application, the second outer side surface 22 includes a sixth surface 221 and a seventh surface 222 sequentially distributed along the first direction X, where along the third direction Z, the seventh surface 222 protrudes from the sixth surface 221.

The sixth surface 221 and the seventh surface 222 are sequentially distributed along the first direction X, and after the punch 20 cooperates with the through hole 11 to extrude the workpiece to be processed, the sixth surface 221 corresponds to the opening of the structure after the workpiece to be processed is extruded.

The seventh surface 222 protrudes from the sixth surface 221 along the third direction Z, and during the forming process, the seventh surface 222 is closer to the wall of the through hole 11 than the sixth surface 221 along the third direction Z. During the forming process, the thickness of the structure extruded by the seventh surface 222 and the wall of the through hole 11 is thinner, and the thickness of the structure extruded by the sixth surface 221 and the wall of the through hole 11 is thicker.

In the above solution, the seventh surface 222 protrudes from the sixth surface 221 along the third direction Z, so that the opening of the wall portion of the casing 30 corresponding to the second outer side surface 22 is thickened, further reducing the risk of cracking in the region of the casing 30 near the welding position between the casing 30 and the end cover.

According to some embodiments of this application, a dimension by which the seventh surface 222 protrudes from the sixth surface 221 along the third direction Z may be d₁, satisfying d₁ = d.

According to some embodiments of this application, the through hole 11 has a second inner side surface, where when the punch 20 cooperates with the through hole 11, the second inner side surface is opposite the second outer side surface 22 in the third direction Z.

A minimum distance between the seventh surface 222 and the second inner side surface along the third direction Z is D₁, satisfying D₁ = D, and 10% ≤ d₁/D₁ ≤ 80%.

Optionally, d₁/D₁ may be, but is not limited to, 10%, 15%, 20%, 25%, 30%, 35%, 40%, 45%, 50%, 55%, 60%, 65%, 70%, 75%, 80%, or the like.

According to some embodiments of this application, along the first direction X, the second inner side surface includes a tenth surface and an eleventh surface sequentially connected, where when the punch 20 cooperates with the through hole 11, the tenth surface cooperates with the punch 20 prior to the eleventh surface; and along the first direction X, a distance between the tenth surface and the seventh surface 222 in the third direction Z gradually decreases.

The tenth surface may be located at the opening position where the punch 20 enters the through hole 11.

Punching process: During cooperation between the punch 20 and the through hole 11, the seventh surface 222 first cooperates with the tenth surface, and as the punch 20 moves, the seventh surface 222 gradually cooperates with the eleventh surface. As the punch 20 moves, the sixth surface 221 gradually cooperates with the tenth surface and the eleventh surface. During punching, after the eleventh surface cooperates with the seventh surface 222 and the sixth surface 221, the second wall 32 of the casing 30 is formed (refer to FIG. 13).

Along the first direction X, from an end of the tenth surface far away from the eleventh surface to an end close to the eleventh surface, a distance between the tenth surface and the seventh surface 222 in the third direction Z gradually decreases. This is equivalent to an opening of the through hole 11 near the tenth surface being larger so as to guide the punch 20 when the punch 20 enters the through hole 11.

In some embodiments, the eleventh surface is parallel to the first direction X, and the eleventh surface is a plane so that an outer surface of the casing 30 corresponding to the eleventh surface is a plane.

In the above solution, along the first direction X, the distance between the tenth surface and the seventh surface 222 in the third direction Z gradually decreases so as to guide the punch 20 when the punch 20 enters the through hole 11.

According to some embodiments of this application, the second inner side surface further includes a twelfth surface, where along the first direction X, the tenth surface, the eleventh surface, and the twelfth surface are sequentially connected, and a distance between the twelfth surface and the seventh surface 222 in the third direction Z gradually increases.

The tenth surface, the eleventh surface, and the twelfth surface are sequentially distributed along the first direction X.

The twelfth surface and the tenth surface may be located at two ends of the through hole 11 in the first direction X. For example, the twelfth surface may constitute another opening of the through hole 11. Along the first direction X, from an end of the twelfth surface close to the eleventh surface to an end far away from the eleventh surface, a distance between the twelfth surface and the seventh surface 222 in the third direction Z gradually increases, and an opening of the through hole 11 near the twelfth surface is larger, facilitating material flow when the punch 20 cooperates with the through hole 11.

In the above solution, along the first direction X, the distance between the twelfth surface and the seventh surface 222 in the third direction Z gradually increases, facilitating material flow during punching to release stress.

According to some embodiments of this application, the second outer side surface 22 further includes a second transition surface, where along the first direction X, the sixth surface 221, the second transition surface, and the seventh surface 222 are sequentially distributed; and along the first direction X, a dimension by which the second transition surface protrudes from the sixth surface 221 gradually increases.

To distinguish from the first outer side surface 21, the previously mentioned transition surface 213 may be referred to as a first transition surface.

The second transition surface is configured to connect the sixth surface 221 and the seventh surface 222 so as to realize transition from the sixth surface 221 to the seventh surface 222.

In the above solution, the provision of the second transition surface facilitates demolding of the punch 20 and reduces damage caused by the punch 20 to the workpiece to be processed.

According to some embodiments of this application, the second transition surface is a plane, and an angle between the second transition surface and a plane on which the seventh surface 222 is located is θ1, satisfying 3° ≤ θ₁ = θ ≤ 60°.

Optionally, θ1 may be, but is not limited to, 3°, 6°, 9°, 12°, 15°, 18°, 21°, 24°, 27°, 30°, 33°, 36°, 39°, 42°, 45°, 48°, 51°, 54°, 57°, 60°, or the like.

Optionally, 20° ≤ θ1 ≤ 40°.

In the above solution, when the angle between the second transition surface and the plane on which the seventh surface 222 is located satisfies the above range: on one hand, in the case of θ1 ≥ 3°, the forming resistance is relatively small and the demolding resistance is relatively small; on the other hand, in the case of θ1 ≤ 60°, the dimension of the second transition surface in the third direction Z is relatively small, which reduces the space occupation at the position corresponding to the sixth surface 221 after the casing is formed, allowing the battery cell to have a relatively high energy density.

According to some embodiments of this application, the second transition surface transitions to the sixth surface 221 through a third arc surface, and the second transition surface transitions to the seventh surface 222 through a fourth arc surface.

In the above solution, the second transition surface transitions to the sixth surface 221 through the third arc surface, and the second transition surface transitions to the seventh surface 222 through the fourth arc surface, reducing scratching caused by the punch 20 to the workpiece to be processed during demolding and facilitating demolding.

According to some embodiments of this application, a radius of the third arc surface is R₃, satisfying 0.05 mm ≤ R₃ ≤ 0.4 mm; and/or a radius of the fourth arc surface is R₄, satisfying 0.05 mm ≤ R₄ ≤ 0.4 mm.

Optionally, R₃ may be, but is not limited to, 0.05 mm, 0.07 mm, 0.1 mm, 0.13 mm, 0.15 mm, 0.17 mm, 0.2 mm, 0.23 mm, 0.25 mm, 0.27 mm, 0.3 mm, 0.33 mm, 0.35 mm, 0.37 mm, 0.4 mm, or the like.

Optionally, R₄ may be, but is not limited to, 0.05 mm, 0.07 mm, 0.1 mm, 0.13 mm, 0.15 mm, 0.17 mm, 0.2 mm, 0.23 mm, 0.25 mm, 0.27 mm, 0.3 mm, 0.33 mm, 0.35 mm, 0.37 mm, 0.4 mm, or the like.

In the above solution, when the radius of the third arc surface satisfies the above relationship, and/or the radius of the fourth arc surface satisfies the above relationship: on one hand, in the case of R₃ ≥ 0.05 mm and/or R₄ ≥ 0.05 mm, the processing difficulty is relatively low; on the other hand, in the case of R₃ ≤ 0.4 mm and/or R₄ ≤ 0.4 mm, the damage caused by the punch 20 to the workpiece to be processed is reduced, and the damage to the punch 20 during demolding is reduced, thereby improving the service life of the punch 20.

Optionally, 0.08 mm ≤ R₃ ≤ 0.12 mm; and/or 0.08 mm ≤ R₄ ≤ 0.12 mm.

According to some embodiments of this application, a surface roughness of the third arc surface is Ra₃, satisfying 0.01 mm ≤ Ra₃ ≤ 0.1 mm; and/or a surface roughness of the fourth arc surface is Ra₄, satisfying 0.01 mm ≤ Ra₄ ≤ 0.1 mm.

The surface roughness Ra₃ and the surface roughness Ra₄ are both arithmetic mean deviations of the profile.

A smaller value of surface roughness indicates a smoother surface and a higher processing and manufacturing difficulty.

In the above solution, when the surface roughness of the third arc surface satisfies the above requirements, and/or the surface roughness of the fourth arc surface satisfies the above requirements: on one hand, scratching caused by the punch 20 to the workpiece to be processed during demolding is reduced, facilitating demolding; on the other hand, the processing and manufacturing difficulty is lower and the processing cost is lower.

Optionally, Ra₃ may be, but is not limited to, 0.01 mm, 0.02 mm, 0.03 mm, 0.04 mm, 0.05 mm, 0.06 mm, 0.07 mm, 0.08 mm, 0.09 mm, 0.1 mm, or the like.

Optionally, Ra₄ may be, but is not limited to, 0.01 mm, 0.02 mm, 0.03 mm, 0.04 mm, 0.05 mm, 0.06 mm, 0.07 mm, 0.08 mm, 0.09 mm, 0.1 mm, or the like.

Optionally, 0.03 mm ≤ Ra₃ ≤ 0.07 mm; and/or, 0.03 mm ≤ Ra₄ ≤ 0.07 mm.

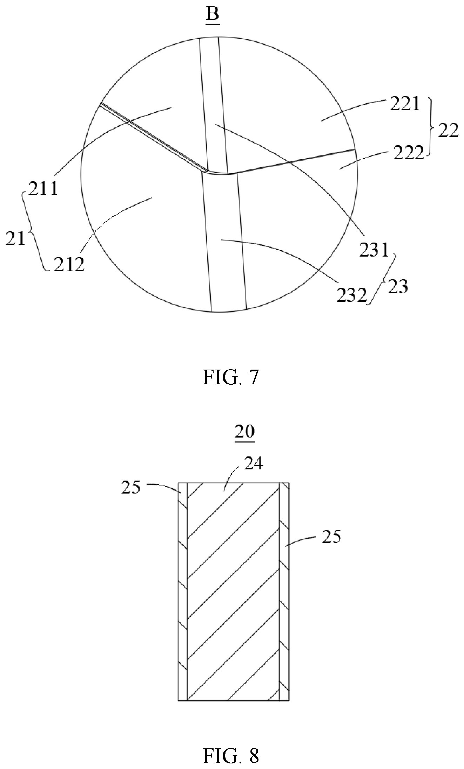

Referring to FIG. 7, FIG. 7 is a partial enlarged view at position B in FIG. 6. According to some embodiments of this application, the punch 20 further has a corner surface 23, where the corner surface 23 connects the first outer side surface 21 and the second outer side surface 22 adjacent to each other, and the corner surface 23 includes an eighth surface 231 and a ninth surface 232 sequentially distributed along the first direction X, where the eighth surface 231 and the ninth surface 232 are both arc surfaces, and along a radial direction of the arc surfaces, the ninth surface 232 protrudes from the eighth surface 231.

After the punch 20 cooperates with the through hole 11, the corner surface 23 cooperates with the wall surface of the through hole 11 to extrude the workpiece to be processed, so that in the formed casing, the region near the opening at the corner of the casing is also thickened.

In some embodiments, the eighth surface 231 connects the first surface 211 and the sixth surface 221, and the ninth surface 232 connects the second surface 212 and the seventh surface 222, so that after the punch 20 cooperates with the through hole 11, in the casing formed by extruding the workpiece to be processed, the entire circumference at the opening of the casing is thickened.

In the above solution, thickening is performed at the corner of the punch 20 to facilitate thickening at the corner of the casing after the casing is formed, enhancing the strength of the casing and reducing the risk of cracking of the casing.

Referring to FIG. 8, FIG. 8 is a schematic view of a substrate and a coating of a punch according to some embodiments of this application. According to some embodiments of this application, the punch 20 includes a substrate 24 and a coating 25 disposed on a surface of the substrate 24, where a material of the substrate 24 is steel, and a material of the coating 25 is titanium aluminum chromium nitride, chromium aluminum nitride, or titanium aluminum nitride.

In the above solution, the material of the substrate 24 is steel, allowing the substrate 24 to have a relatively high strength. The coating 25 disposed on the surface of the substrate 24 can improve the wear resistance of the punch 20 and extend the service life of the punch 20.

According to some embodiments of this application, the punch 20 and the die 10 constitute one set of forming die 100, and during forming of the casing of the battery cell, a plurality of sets of forming dies 100 need to be provided to process the workpiece to be processed into a structure of a desired shape.

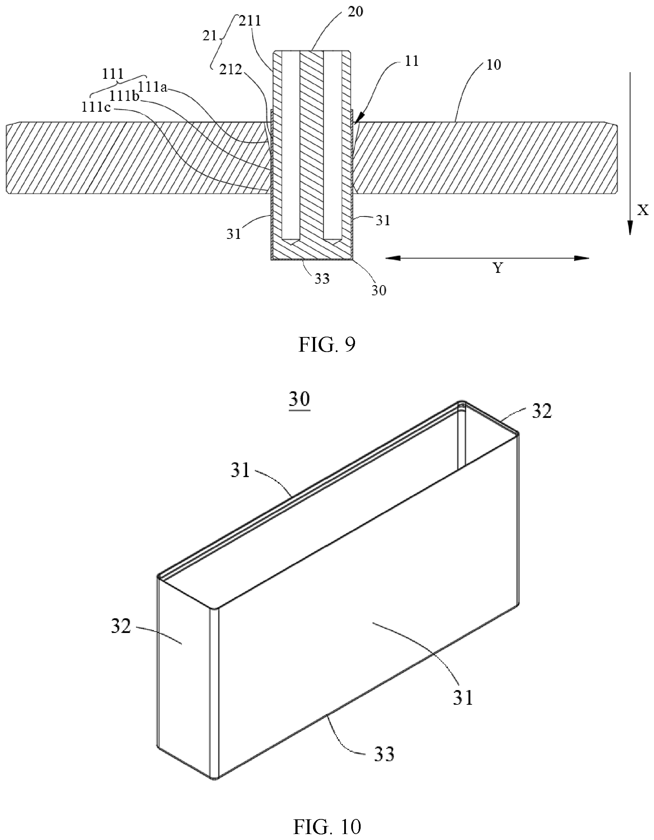

Referring to FIG. 6, and further referring to FIGs. 9 to 13, FIG. 9 is a schematic view of a punch and a die cooperating to form a casing according to some embodiments of this application, FIG. 10 is a schematic structural view of a casing formed by cooperation between a punch and a die according to some embodiments of this application, FIG. 11 is a cross-sectional view of a casing formed by cooperation between a punch and a die according to some embodiments of this application, FIG. 12 is a partial enlarged view at position C in FIG. 11, and FIG. 13 is a partial schematic view of a second wall according to some embodiments of this application. According to some embodiments of this application, after the workpiece to be processed is extruded through cooperation between the punch 20 and the die 10, in the formed casing 30, the casing 30 includes two first walls 31 disposed opposite each other along the second direction Y, two second walls 32 disposed opposite each other along the third direction Z, and a bottom wall 33, the bottom wall 33 being disposed opposite the opening of the casing 30. The first wall 31 includes a first region 311 and a second region 312 sequentially distributed along the first direction X, where the first region 311 constitutes the opening of the casing 30, the second region 312 is farther from the opening of the casing 30 compared to the first region 311, a thickness direction of the first wall 31 is parallel to the second direction Y, and a thickness of the first region 311 is greater than a thickness of the second region 312. The second wall 32 includes a third region 321 and a fourth region 322 sequentially distributed along the first direction X, where the third region 321 constitutes the opening of the casing 30, the fourth region 322 is farther from the opening of the casing compared to the third region 321, a thickness direction of the second wall 32 is parallel to the third direction Z, and a thickness of the third region 321 is greater than a thickness of the fourth region 322.

During forming of the casing 30, a lower end surface 26 of the punch 20 presses the workpiece to be processed into the through hole 11 of the die 10. As the workpiece to be processed moves in the through hole 11, the workpiece to be processed is clamped by the wall of the through hole 11 and the punch 20, the first outer side surface 21 cooperates with the through hole 11 to form the first wall 31 (refer to FIG. 9), and the second outer side surface 22 cooperates with the through hole 11 to form the second wall 32. The lower end surface 26 is configured to form the bottom wall 33.

For example, the first surface 211 cooperates with the wall of the through hole 11 to form the first region 311, and the second surface 212 cooperates with the wall of the through hole 11 to form the second region 312. The sixth surface 221 cooperates with the wall of the through hole 11 to form the third region 321, and the seventh surface 222 cooperates with the wall of the through hole 11 to form the fourth region 322.

According to some embodiments of this application, an embodiment of this application further provides a battery cell manufacturing system including a plurality of forming dies 100 provided in any one of the above embodiments, where the plurality of forming dies 100 are configured for a plurality of forming processes of the casing 30.

In some embodiments, during forming of the casing 30, the casing 30 needs to use a plurality of forming dies 100. The structures of the punch 20 and the die 10 in the plurality of forming dies 100 are similar. The workpiece to be processed is punched multiple times to form the casing 30 of a desired structure.

For example, during forming of the casing 30 with a rectangular structure, the workpiece to be processed is a sheet structure, and the workpiece to be processed may undergo processes such as large ellipse, medium ellipse, small ellipse, squaring, fine drawing, and cutting to form the casing 30 of the desired structure. At least in the squaring and fine drawing processes, the forming die 100 provided in the embodiments of this application is used.

According to some embodiments of this application, referring to FIGs. 1 to 13, an embodiment of this application provides a forming die 100 including a die 10 and a punch 20. The die 10 has a through hole 11, and the punch 20 is configured to press a workpiece to be processed into the through hole 11 so as to cooperate with the through hole 11 to extrude the workpiece to be processed.

The punch 20 has a first outer side surface 21 extending in a first direction X, there are two first outer side surfaces 21, the two first outer side surfaces 21 being disposed opposite each other along a second direction Y; there are two second outer side surfaces 22, the two second outer side surfaces 22 being disposed opposite each other along a third direction Z. An area of the second outer side surface 22 is smaller than an area of the first outer side surface 21. The first outer side surface 21 includes a first surface 211 and a second surface 212 sequentially distributed along the first direction X, where along the second direction Y, the second surface 212 protrudes from the first surface 211, and a dimension by which the second surface 212 protrudes from the first surface 211 is d.

The through hole 11 has a first inner side surface 111 and a second inner side surface, where when the punch 20 cooperates with the through hole 11, the first inner side surface 111 is opposite the first outer side surface 21 in the second direction Y, and the second inner side surface is opposite the second outer side surface 22 in the third direction Z. Along the second direction Y, a minimum distance between the second surface 212 and the first inner side surface 111 is D, satisfying 10% ≤ d/D ≤ 80%.

The first outer side surface 21 further includes a transition surface 213, where along the first direction X, the first surface 211, the transition surface 213, and the second surface 212 are sequentially distributed; and along the first direction X, a dimension by which the transition surface 213 protrudes from the first surface 211 gradually increases. The transition surface 213 is a plane, and an angle between the transition surface 213 and a plane on which the second surface 212 is located is θ, satisfying 3° ≤ θ ≤ 60°. The transition surface 213 transitions to the first surface 211 through a first arc surface 214, and the transition surface 213 transitions to the second surface 212 through a second arc surface 215. A surface roughness of the first arc surface 214 is Ra₁, satisfying 0.01 mm ≤ Ra₁ ≤ 0.1 mm; and/or a surface roughness of the second arc surface 215 is Ra₂, satisfying 0.01 mm ≤ Ra₂ ≤ 0.1 mm. The punch 20 includes a substrate 24 and a coating 25 disposed on a surface of the substrate 24, where a material of the substrate 24 is steel, and a material of the coating 25 is titanium aluminum chromium nitride, chromium aluminum nitride, or titanium aluminum nitride.

According to the forming die 100 in the embodiments of this application, the second surface 212 protrudes from the first surface 211 so that an opening of the structure obtained after the workpiece to be processed is extruded is thickened, thereby improving the strength at the opening after the casing is formed, reducing the risk of cracking of the casing near a welding position between the casing and the end cover, and improving the reliability of the battery cell. Additionally, the above arrangement reduces the demolding difficulty and extends the service life of the punch 20.

Although this application has been described with reference to preferred embodiments, various improvements can be made thereto and components therein can be replaced with equivalents without departing from the scope of this application. In particular, as long as there is no structural conflict, the technical features mentioned in the various embodiments can be combined in any manner. This application is not limited to the specific embodiments disclosed herein, but includes all technical solutions falling within the scope of the claims.

## Claims

1. A forming die, applied to forming of a casing of a battery cell, wherein the forming die comprises:
a die having a through hole; and
a punch, wherein the punch is configured to press a workpiece to be processed into the through hole so as to cooperate with the through hole to extrude the workpiece to be processed;
wherein the punch has a first outer side surface; the first outer side surface comprises a first surface and a second surface sequentially distributed along a first direction, the first direction being a punching direction of the punch; the second surface is configured to enter the through hole along the first direction prior to the first surface; and along a second direction, the second surface protrudes from the first surface, the second direction being perpendicular to the first direction.

2. The forming die according to claim 1, wherein the through hole has a first inner side surface, wherein when the punch cooperates with the through hole, the first inner side surface is opposite the first outer side surface in the second direction;
along the first direction, the first inner side surface comprises a third surface and a fourth surface sequentially connected, wherein when the punch cooperates with the through hole, the third surface cooperates with the punch prior to the fourth surface; and
along the first direction, a distance between the third surface and the second surface in the second direction gradually decreases.

3. The forming die according to claim 2, wherein the first inner side surface further comprises a fifth surface, wherein along the first direction, the third surface, the fourth surface, and the fifth surface are sequentially connected, and a distance between the fifth surface and the second surface in the second direction gradually increases.

4. The forming die according to any one of claims 1 to 3, wherein the first outer side surface further comprises a transition surface, wherein along the first direction, the first surface, the transition surface, and the second surface are sequentially distributed; and
along the first direction, a dimension by which the transition surface protrudes from the first surface gradually increases.

5. The forming die according to claim 4, wherein the transition surface is a plane, and an angle between the transition surface and a plane on which the second surface is located is θ, satisfying 3° ≤ θ ≤ 60°.

6. The forming die according to claim 5, wherein 20° ≤ θ ≤ 40°.

7. The forming die according to any one of claims 4 to 6, wherein the transition surface transitions to the first surface through a first arc surface, and the transition surface transitions to the second surface through a second arc surface.

8. The forming die according to claim 7, wherein a radius of the first arc surface is R₁, satisfying 0.05 mm ≤ R₁ ≤ 0.4 mm; and/or
a radius of the second arc surface is R₂, satisfying 0.05 mm ≤ R₂ ≤ 0.4 mm.

9. The forming die according to claim 8, wherein 0.08 mm ≤ R₁ ≤ 0.12 mm; and/or 0.08 mm ≤ R₂ ≤ 0.12 mm.

10. The forming die according to any one of claims 7 to 9, wherein a surface roughness of the first arc surface is Ra₁, satisfying 0.01 mm ≤ Ra₁ ≤ 0.1 mm; and/or
a surface roughness of the second arc surface is Ra₂, satisfying 0.01 mm ≤ Ra₂ ≤ 0.1 mm.

11. The forming die according to claim 10, wherein 0.03 mm ≤ Ra₁ ≤ 0.07 mm; and/or, 0.03 mm ≤ Ra₂ ≤ 0.07 mm.

12. The forming die according to any one of claims 1 to 11, wherein the first outer side surface is provided in two, and the two first outer side surfaces are disposed opposite each other in the second direction; and
the punch further has two second outer side surfaces disposed opposite each other in a third direction, wherein the third direction, the second direction, and the first direction are perpendicular to each other, and an area of the second outer side surface is smaller than an area of the first outer side surface.

13. The forming die according to claim 12, wherein the second outer side surface comprises a sixth surface and a seventh surface sequentially distributed along the first direction, wherein along the third direction, the seventh surface protrudes from the sixth surface.

14. The forming die according to claim 12 or 13, wherein the punch further has a corner surface, wherein the corner surface connects the first outer side surface and the second outer side surface adjacent to each other, and the corner surface comprises an eighth surface and a ninth surface sequentially distributed along the first direction, wherein the eighth surface and the ninth surface are both arc surfaces, and along a radial direction of the arc surfaces, the ninth surface protrudes from the eighth surface.

15. The forming die according to any one of claims 1 to 14, wherein the through hole has a first inner side surface, wherein when the punch cooperates with the through hole, the first inner side surface is opposite the first outer side surface in the second direction; and
a dimension d by which the second surface protrudes from the first surface is greater than or equal to 0.1 times a minimum distance D between the second surface and the first inner side surface, and the dimension d by which the second surface protrudes from the first surface is less than or equal to 0.8 times the minimum distance D between the second surface and the first inner side surface.

16. The forming die according to claim 15, wherein the dimension d by which the second surface protrudes from the first surface is greater than or equal to 0.3 times the minimum distance D between the second surface and the first inner side surface, and the dimension d by which the second surface protrudes from the first surface is less than or equal to 0.5 times the minimum distance D between the second surface and the first inner side surface.

17. The forming die according to any one of claims 1 to 16, wherein the punch comprises a substrate and a coating disposed on a surface of the substrate, wherein a material of the substrate is steel, and a material of the coating is titanium aluminum chromium nitride, chromium aluminum nitride, or titanium aluminum nitride.

18. A battery cell manufacturing system, comprising a plurality of forming dies according to any one of claims 1 to 17, wherein the plurality of forming dies are configured for a plurality of forming processes of the casing.
